(19) Europäisches Patentamt / European Patent Office / Office européen des brevets

(11) **EP 4 421 554 A1**

(12) **EUROPEAN PATENT APPLICATION**
published in accordance with Art. 153(4) EPC

(43) Date of publication:
**28.08.2024 Bulletin 2024/35**

(21) Application number: **22883329.9**

(22) Date of filing: **03.10.2022**

(51) International Patent Classification (IPC):
**G02C 7/06** *(2006.01)*   **G02C 13/00** *(2006.01)*

(52) Cooperative Patent Classification (CPC):
**G02C 7/06; G02C 13/00**

(86) International application number:
**PCT/JP2022/036881**

(87) International publication number:
**WO 2023/068022 (27.04.2023 Gazette 2023/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.10.2021 JP 2021170899**

(71) Applicant: **Nikon-Essilor Co., Ltd.
Tokyo 130-0026 (JP)**

(72) Inventor: **MIYAZAKI, Ken
Tokyo 130-0026 (JP)**

(74) Representative: **Viering, Jentschura & Partner
mbB
Patent- und Rechtsanwälte
Grillparzerstraße 14
81675 München (DE)**

(54) **METHOD FOR MANUFACTURING PAIR OF SPECTACLE LENSES**

(57)    Provided is a method for manufacturing a pair of spectacle lenses 1 composed of a right eye spectacle lens (10R) used for a right eye and a left eye spectacle lens (10L) used for a left eye, the method comprising: finding a lens design condition under which a difference between a sum obtained by adding the magnitude of an intra-range change region in which a refractive power change falls within a predetermined range to the magnitude of a distinct vision region in which astigmatism is smaller than a predetermined value on the center side of the right eye spectacle lens (10R), and a sum obtained by adding the magnitude of the intra-range change region to the magnitude of the distinct vision region on the center side of the left eye spectacle lens (10L) becomes smaller than when the right eye spectacle lens (10R) and the left eye spectacle lens (10L) are designed under a predetermined condition; and designing and manufacturing the right eye spectacle lens (10R) and the left eye spectacle lens (10L) under the found lens design condition.

FIG.1

## Description

TECHNICAL FIELD

The present invention is related to a method for manufacturing a pair of spectacle lenses.

TECHNICAL BACKGROUND

Conventionally, a pair of spectacle lenses such as those disclosed in Patent Literature 1 and Patent Literature 2, for example, has been known. Those spectacle lenses may be referred to as progressive refractive power lenses, and there is a demand for making it easy to have binocular vision therewith.

PRIOR ART LIST

PATENT DOCUMENTS

Patent Literature 1: Japanese Patent No. 6310847B
Patent Literature 2: Japanese Patent No. 4979774B

SUMMARY OF THE INVENTION

A method for manufacturing a pair of spectacle lenses according to the present invention is a method for manufacturing a pair of spectacle lenses comprising a right eye spectacle lens used for a right eye and a left eye spectacle lens used for a left eye, wherein the right eye spectacle lens includes a right eye distance vision part having refractive power suitable for distance vision and a right eye near vision part having refractive power suitable for near vision, the left eye spectacle lens includes a left eye distance vision part having refractive power that is suitable for distance vision and different from that of the right eye distance vision part and a left eye near vision part having refractive power suitable for near vision, and the method comprises: calculating a lens design condition under which a difference between a sum of a size of a distinct vision region having astigmatism lower than a predetermined value and a size of a within-limit change region having a refractive power change within a predetermined range on a center side of the right eye spectacle lens and a sum of the size of the distinct vision region and the size of the within-limit change region on a center side of the left eye spectacle lens is smaller than the difference exhibited when the right eye spectacle lens and the left eye spectacle lens are designed under a predetermined design condition; designing the right eye spectacle lens and the left eye spectacle lens under the calculated lens design condition; and manufacturing the right eye spectacle lens and the left eye spectacle lens designed under the lens design condition.

BRIEF DESCRIPTION OF THE DRAWINGS

FIG. 1 is a schematic drawing showing a pair of spectacle lenses according to an embodiment of the present disclosure;
FIG. 2 is a schematic diagram showing a right eye spectacle lens;
FIG. 3 is a schematic diagram showing a left eye spectacle lens;
FIG. 4 is a block diagram showing a manufacturing system of the pair of spectacle lenses;
FIG. 5 is a flowchart showing a flow in a method for manufacturing the pair of spectacle lenses;
FIG. 6 presents drawings showing a first example of a distribution of astigmatism values and a distribution of addition values in a right eye spectacle lens designed under a standard design condition;
FIG. 7 presents drawings showing a first example of a distribution of astigmatism values and a distribution of addition values in a left eye spectacle lens designed under the standard design condition;
FIG. 8 presents drawings showing a first example of a distribution of astigmatism values and a distribution of addition values in a left eye spectacle lens designed under a lens design condition;
FIG. 9 presents drawings showing a second example of a distribution of astigmatism values and a distribution of addition values in a right eye spectacle lens designed under the standard design condition;
FIG. 10 presents drawings showing a second example of a distribution of astigmatism values and a distribution of addition values in a left eye spectacle lens designed under the standard design condition; and

FIG. 11 presents drawings showing a second example of a distribution of astigmatism values and a distribution of addition values in a left eye spectacle lens designed under the lens design condition.

DESCRIPTION OF THE EMBODIMENTS

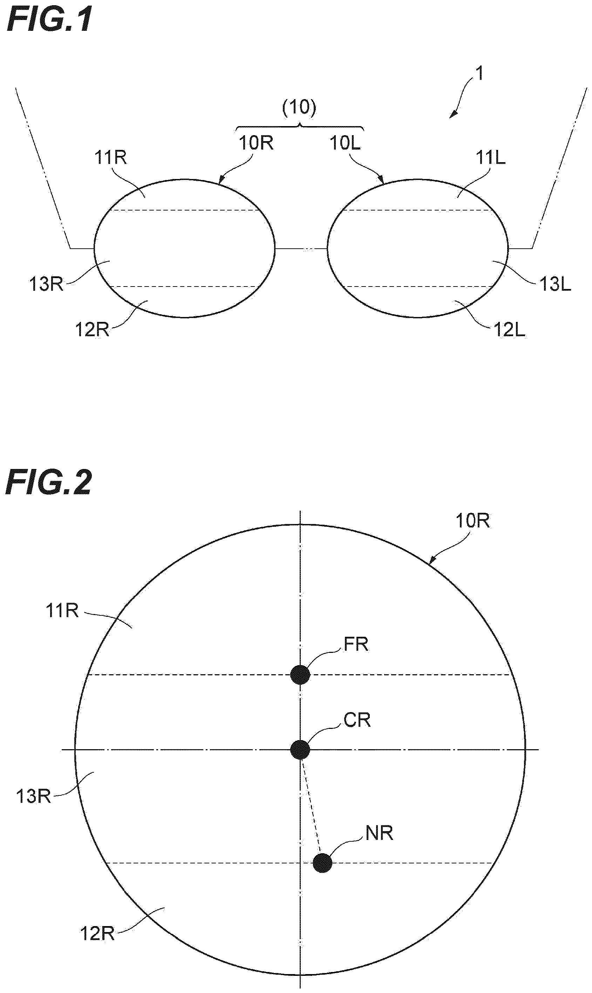

In the following sections, preferred embodiments of the present invention will be described. FIG. 1 schematically shows a pair of spectacle lenses 1 according to an embodiment of the present disclosure. As shown in FIG. 1, the pair of spectacle lenses 1 comprises a right eye spectacle lens 10R and a left eye spectacle lens 10L. In the present embodiment, the right eye spectacle lens 10R and the left eye spectacle lens 10L may simply be referred to as spectacle lenses 10 as a collective reference. The spectacle lenses 10 may be referred to as progressive refractive power lenses. Further, positional relationships in the spectacle lenses 10 such as a "top part", a "bottom part", and the like refer to positional relationships at the time of spectacles being worn after the spectacle lenses 10 are processed into the spectacles. Further, the top-and-bottom positional relationship in the spectacle lenses 10 is the same as the top-and-bottom positional relationship in the drawing pages of FIGS. 1 to 3 and FIGS. 6 to 11.

As shown in FIG. 1, the right eye spectacle lens 10R comprises: a right eye distance vision part 11R; a right eye near vision part 12R formed in a different position from the right eye distance vision part 11R; and a right eye progressive part 13R formed between the right eye distance vision part 11R and the right eye near vision part 12R. The right eye distance vision part 11R has refractive power suitable for distance vision. The right eye near vision part 12R has refractive power suitable for near vision. In the right eye progressive part 13R, the refractive power continuously transitions from the refractive power suitable for distance vision to the refractive power suitable for near vision, from the vicinity of the right eye distance vision part 11R toward the vicinity of the right eye near vision part 12R.

FIG. 2 schematically shows the right eye spectacle lens 10R in a state before being processed (in a state before undergoing a lens edging process) to fit the shape of a spectacle frame. As shown in FIG. 2, the right eye spectacle lens 10R in the state before undergoing the lens edging process is formed to have a circular shape in a front view. In the state before undergoing the lens edging process, formed in a top part of the right eye spectacle lens 10R is the right eye distance vision part 11R; formed in a bottom part of the right eye spectacle lens 10R is the right eye near vision part 12R; and formed in a middle part of the right eye spectacle lens 10R is the right eye progressive part 13R.

As shown in FIG. 1, the left eye spectacle lens 10L comprises: a left eye distance vision part 11L; a left eye near vision part 12L formed in a different position from the left eye distance vision part 11L; and a left eye progressive part 13L formed between the left eye distance vision part 11L and the left eye near vision part 12L. The left eye distance vision part 11L has refractive power suitable for distance vision. The left eye near vision part 12L has refractive power suitable for near vision. In the left eye progressive part 13L, the refractive power continuously transitions from the refractive power suitable for distance vision to the refractive power suitable for near vision, from the vicinity of the left eye distance vision part 11L toward the vicinity of the left eye near vision part 12L.

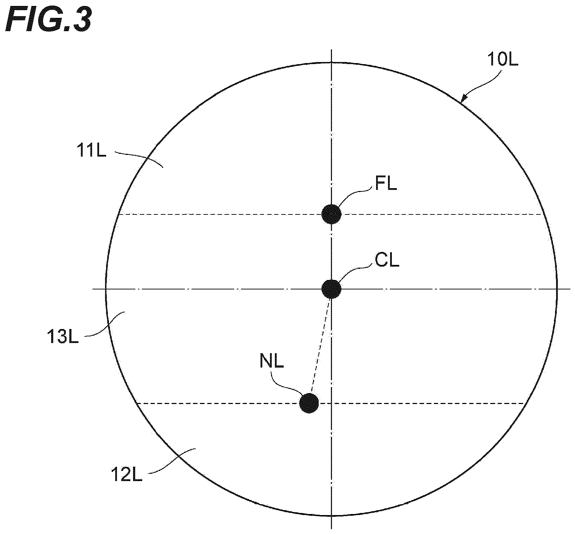

FIG. 3 schematically shows the left eye spectacle lens 10L in a state before being processed (in a state before undergoing a lens edging process) to fit the shape of a spectacle frame. As shown in FIG. 3, the left eye spectacle lens 10L in the state before undergoing the lens edging process is formed to have a circular shape in a front view. In the state before undergoing the lens edging process, formed in a top part of the left eye spectacle lens 10L is the left eye distance vision part 11L; formed in a bottom part of the left eye spectacle lens 10L is the left eye near vision part 12L; and formed in a middle part of the left eye spectacle lens 10L is the left eye progressive part 13L.

Further, the right eye spectacle lens 10R is set with a plurality of reference points. Examples of the reference points include, as shown in FIG. 2, an optical center CR, a distance vision reference point FR, and a near vision reference point NR. The optical center CR is a reference point serving as the center in a designing process. The distance vision reference point FR is a measurement reference point used at the time of measuring distance vision lens power (the refractive power suitable for distance vision) of the right eye distance vision part 11R. The near vision reference point NR is a measurement reference point used at the time of measuring near vision lens power (the refractive power suitable for near vision) of the right eye near vision part 12R. Similarly to the right eye spectacle lens 10R, the left eye spectacle lens 10L is set with a plurality of reference points, such as an optical center CL, a distance vision reference point FL, and a near vision reference point NL (see FIG. 3). In the present embodiment, as a numerical value expressing the refractive power, "lens power" (unit: diopters (D)) may be used. Further, the lens power designated as a prescription value will be referred to as "prescription lens power", whereas a lens power change made to the distance vision lens power will be referred to as an "addition value".

The pair of spectacle lenses 1 according to the present embodiment may be offered, in some situations, to a wearer whose prescription lens power of the right eye spectacle lens 10R is different from his/her prescription lens power of the left eye spectacle lens 10L. In other words, in some situations, the right eye spectacle lens 10R and the left eye spectacle lens 10L may have at least mutually-different distance vision lens power values. When the prescription lens power of the right eye spectacle lens 10R is different from the prescription lens power of the left eye spectacle lens 10L, because the right eye spectacle lens 10R and the left eye spectacle lens 10L are different from each other in the size of the region where astigmatism is lower than a predetermined value and in the size of the region where the lens power change (the refractive power change) is within a predetermined range, when an object is viewed through these lenses, clarity (blurriness) varies. In that situation, there is a high possibility that the wearer will have monocular vision, which is to view the object with a single eye corresponding to the lens having the higher clarity between the right eye spectacle lens 10R and the left eye spectacle lens 10L; it is therefore difficult to have binocular vision, which is to view an object by using both the left eye and the right eye at the same time.

In the present embodiment, the region where astigmatism is lower than the predetermined value will be referred to as a distinct vision region. In this situation, the predetermined value for astigmatism is a limit value for astigmatism with which it is possible to clearly view an object through the spectacle lenses 10 and may be 0.50 D, for example. Further, the region where the lens power change (the refractive power change) is within the predetermined range will be referred to as a within-limit change region. In this situation, being within the predetermined range for the lens power change is being within a range of lens power changes with which it is possible to clearly view an object through the spectacle lenses 10 and may denote being within a range where the lens power change made to the distance vision lens power is 0.25 D, for example.

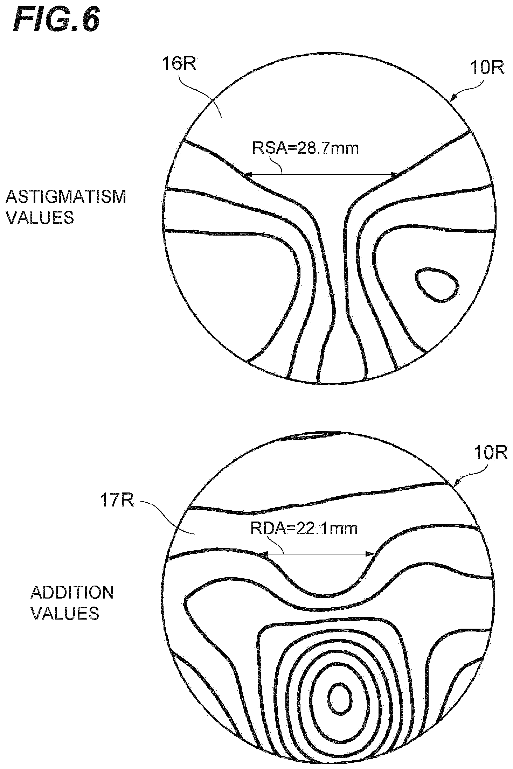

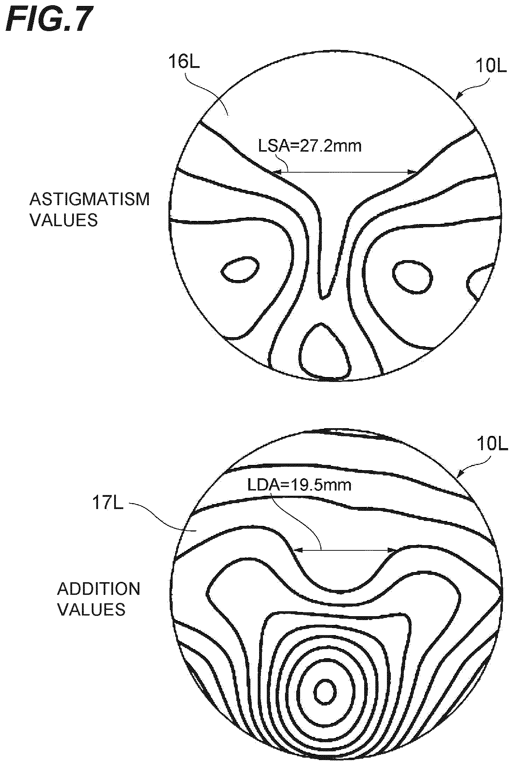

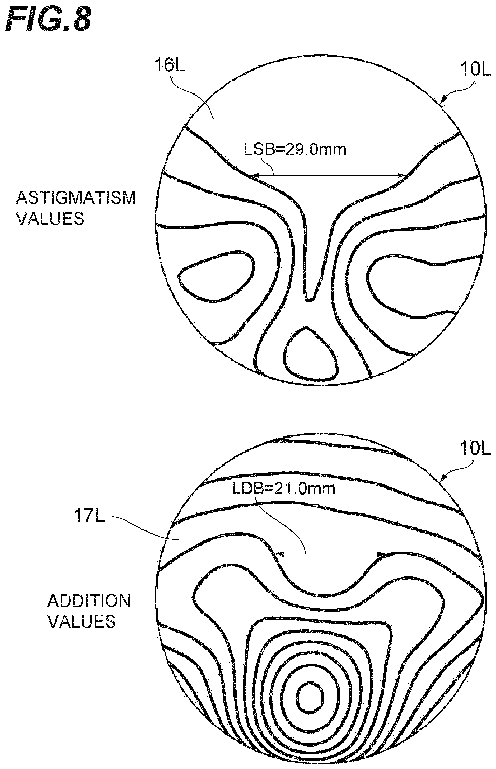

In the present embodiment, the lenses are designed in such a manner that the sizes of a distinct vision region 16R and a within-limit change region 17R (see FIG. 6, for example) on the center side of the right eye spectacle lens 10R are as equal as possible to the sizes of a distinct vision region 16L and a within-limit change region 17L (see FIGS. 7 and 8, for example) on the center side of the left eye spectacle lens 10L. With this configuration, even when the right eye spectacle lens 10R and the left eye spectacle lens 10L have mutually-different distance vision lens power values, because the difference in clarity (blurriness) experienced when an object is viewed through the lenses is kept small, it is possible to provide the pair of spectacle lenses 1 which makes it easy to have binocular vision.

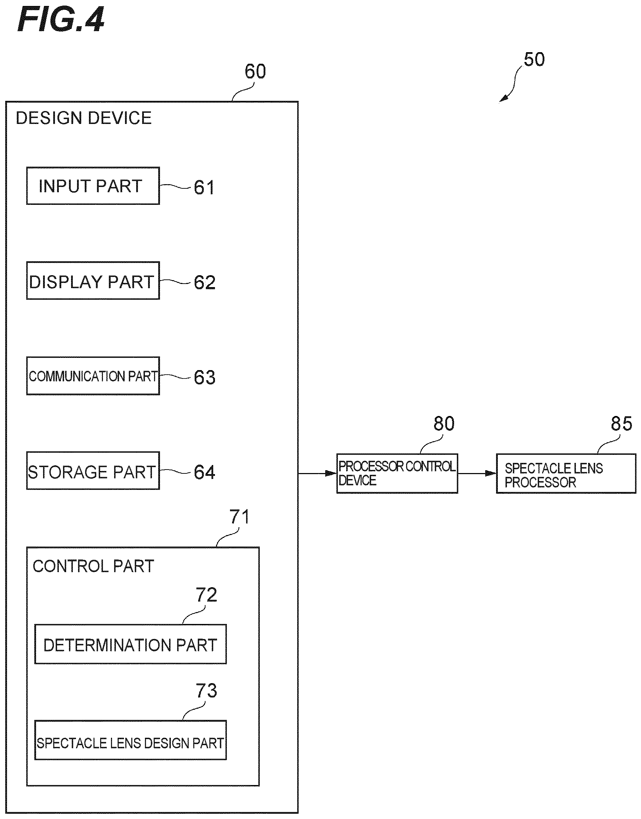

Next, a manufacturing system for manufacturing the pair of spectacle lenses 1 according to the present embodiment will be described. FIG. 4 shows a manufacturing system 50 for the pair of spectacle lenses 1. As shown in FIG. 4, the manufacturing system 50 comprises a design device 60, a processor control device 80, and a spectacle lens processor 85. In FIG. 4, the arrows indicate a flow of spectacle lens design data.

The design device 60 comprises an input part 61, a display part 62, a communication part 63, a storage part 64, and a control part 71. The input part 61 is structured by using an input device such as a keyboard. The input part 61 receives an input of input data such as prescription data of the wearer, which is required by processes performed by the control part 71. The input part 61 outputs the received input data to the control part 71 and also outputs the same to the storage part 64 so as to be stored therein. Alternatively, the input data may be configured so as to be received by the communication part 63 and to be output to the control part 71.

The display part 62 is structured by using an image display device such as a liquid crystal monitor. The display part 62 displays various numerical values such as the input data (e.g., the prescription data of the wearer) input to the input part 61 and the design data of the pair of spectacle lenses 1 obtained from processes performed by the control part 71.

The communication part 63 is structured by using a communication device capable of communicating via the Internet or the like. The communication part 63 transmits the design data of the pair of spectacle lenses 1 obtained from the processes performed by the control part 71 and transmits/receives necessary data, as appropriate.

The storage part 64 is structured by using a storage device such as a memory or a hard disk. The storage part 64 gives/receives data to/from the control part 71 and stores therein various data such as the input data input to the input part 61 and the design data of the pair of spectacle lenses 1 obtained from the processes performed by the control part 71.

The control part 71 is structured by using a processing device such as a Central Processing Unit (CPU). The control part 71 functions as a principal element for an operation to control the design device 60 and performs various processes including an analysis on the prescription values of the wearer and a designing process, by executing a program stored in a non-volatile memory provided for either the storage part 64 or the control part 71.

The control part 71 comprises a determination part 72 and a spectacle lens design part 73. Regarding the prescription values of the wearer, the determination part 72 determines, for example, whether or not the prescription lens power of the right eye spectacle lens 10R is equal to the prescription lens power of the left eye spectacle lens 10L.

The spectacle lens design part 73 sets design parameters based on the prescription data of the wearer input to the input part 61 and a result of the determination by the determination part 72. The design parameters denote the addition values of the right eye spectacle lens 10R and the left eye spectacle lens 10L, goal aberrations in a plurality of positions in the lenses, and the like. The spectacle lens design part 73 designs an overall shape of the pair of spectacle lenses 1 by carrying out an optimization designing process, based on the design parameters.

The processor control device 80 controls the spectacle lens processor 85, based on the design data of the pair of spectacle lenses 1 transmitted from the communication part 63 of the design device 60. The spectacle lens processor 85 manufactures the pair of spectacle lenses 1 under the control of the processor control device 80.

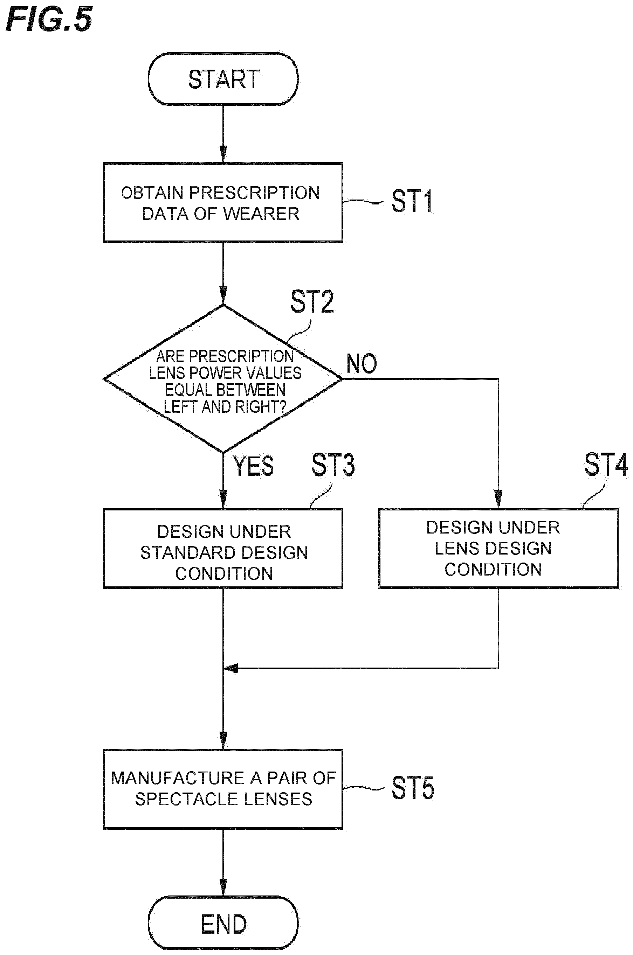

Next, with reference to FIG. 5, a method that is for manufacturing the pair of spectacle lenses 1 and that uses the manufacturing system 50 for the pair of spectacle lenses 1 will be described. FIG. 5 is a flowchart showing a flow in the method for manufacturing the pair of spectacle lenses 1. To begin with, the design device 60 obtains the prescription data of the wearer via the input part 61 (step ST1). In this situation, the prescription data of the wearer obtained via the input part 61 is output to the control part 71.

Subsequently, the determination part 72 of the control part 71 determines whether or not the prescription lens power of the right eye spectacle lens 10R is equal to the prescription lens power of the left eye spectacle lens 10L (step ST2). When the determination result by the determination part 72 is YES, i.e., when the prescription lens power of the right eye spectacle lens 10R is equal to the prescription lens power of the left eye spectacle lens 10L, the process proceeds to step ST3. In step ST3, the spectacle lens design part 73 calculates design parameters for designing the pair of spectacle lenses 1 under a predetermined design condition (hereinafter, "standard design condition"), based on the prescription lens power values of the right eye spectacle lens 10R and the left eye spectacle lens 10L, or the like. The spectacle lens design part 73 designs the pair of spectacle lenses 1 based on the calculated design parameters, and the process proceeds to step ST5.

On the contrary, when the determination result by the determination part 72 is NO, i.e., when the prescription lens power of the right eye spectacle lens 10R is different from the prescription lens power of the left eye spectacle lens 10L, the process proceeds to step ST4. In step ST4, the spectacle lens design part 73 calculates design parameters for designing the pair of spectacle lenses 1 under a lens design condition which makes it easier to have binocular vision than the standard design condition. Based on the calculated design parameters, the spectacle lens design part 73 designs the pair of spectacle lenses 1, and the process proceeds to step ST5.

After that, in step ST5, the spectacle lens processor 85 manufactures the pair of spectacle lenses 1 under the control of the processor control device 80, and the process is thus ended.

Next, the design parameters under the lens design condition according to the present embodiment will be described. As shown in FIG. 6, the size of the distinct vision region 16R on the center side of the right eye spectacle lens 10R designed under the standard design condition is expressed as RSA, whereas the size of the within-limit change region 17R on the center side of the right eye spectacle lens 10R designed under the standard design condition is expressed as RDA. FIG. 6 indicates a distribution of astigmatism values and a distribution of addition values in the right eye spectacle lens 10R designed under the standard design condition corresponding to the prescription lens power of "S +2.00". It is possible to express the size RSA of the distinct vision region 16R and the size RDA of the within-limit change region 17R on the center side of the right eye spectacle lens 10R designed under the standard design condition by using, for example, widths in the left-and-right direction which use the distance vision reference point FR (see FIG. 2) as a reference.

As shown in FIG. 7, the size of the distinct vision region 16L on the center side of the left eye spectacle lens 10L designed under the standard design condition is expressed as LSA, whereas the size of the within-limit change region 17L on the center side of the left eye spectacle lens 10L designed under the standard design condition is expressed as LDA. FIG. 7 indicates a distribution of astigmatism values and a distribution of addition values in the left eye spectacle lens 10L designed under the standard design condition corresponding to the prescription lens power of "S +4.00". It is possible to express the size LSA of the distinct vision region 16L and the size LDA of the within-limit change region 17L on the center side of the left eye spectacle lens 10L designed under the standard design condition by using, for example, widths in the left-and-right direction which use the distance vision reference point FL (see FIG. 3) as a reference.

As shown in FIG. 8, the size of the distinct vision region 16L on the center side of the left eye spectacle lens 10L designed under the lens design condition is expressed as LSB, whereas the size of the within-limit change region 17L on the center side of the left eye spectacle lens 10L designed under the lens design condition is expressed as LDB. FIG. 8 indicates a distribution of astigmatism values and a distribution of addition values in the left eye spectacle lens 10L designed under the lens design condition corresponding to the prescription lens power of "S +4.00". It is possible to express the size LSB of the distinct vision region 16L and the size LDB of the within-limit change region 17L on the center side of the left eye spectacle lens 10L designed under the lens design condition, similarly to the example designed under the standard design condition (for example, by using widths in the left-and-right direction which use the distance vision reference point FL as a reference). In FIGS. 6 to 8 and FIGS. 9 to 11 (described later), the lines drawn in the drawings indicating the distributions of the astigmatism values represent contour lines of the astigmatism values, whereas the lines drawn in the drawings indicating the distributions of the addition values represent contour lines of the addition values.

Further, the size of the distinct vision region 16R on the center side of the right eye spectacle lens 10R designed under the lens design condition is expressed as RSB, whereas the size of the within-limit change region 17R on the center side of the right eye spectacle lens 10R designed under the lens design condition is expressed as RDB. It is possible to express the size RSB of the distinct vision region 16R and the size RDB of the within-limit change region 17R on the center side of the right eye spectacle lens 10R designed under the lens design condition, similarly to the example designed under the standard design condition (for example, by using widths in the left-and-right direction which use the distance vision reference point FR as a reference).

In the present embodiment, the lens design condition is calculated so that the difference between the sum of the size of the distinct vision region 16R and the size of the within-limit change region 17R on the center side of the right eye spectacle lens 10R and the sum of the size of the distinct vision region 16L and the size of the within-limit change region 17L on the center side of the left eye spectacle lens 10L is smaller than the difference observed when the right eye spectacle lens 10R and the left eye spectacle lens 10L are designed under the standard design condition. With this arrangement, it is possible to make smaller the difference in the clarity (the blurriness) experienced when an object is viewed through the lenses, as compared to when the right eye spectacle lens 10R and the left eye spectacle lens 10L are designed under the standard design condition. Accordingly, it is possible to provide the pair of spectacle lenses 1 which makes it easy to have binocular vision even when the right eye spectacle lens 10R and the left eye spectacle lens 10L have the mutually-different distance vision lens power values.

Next, an example will be described in which the sum of the size RSA of the distinct vision region 16R and the size RDA of the within-limit change region 17R on the center side of the right eye spectacle lens 10R designed under the standard design condition is larger than the sum of the size LSA of the distinct vision region 16L and the size LDA of the within-limit change region 17L on the center side of the left eye spectacle lens 10L designed under the standard design condition. In this situation, Conditional Expression (1) presented below is satisfied.

$$RSA + RDA > LSA + LDA \ . \ . \ . \ (1)$$

In the present embodiment, when Conditional Expression (1) is satisfied, a lens design condition is calculated so that Conditional Expression (2) presented below is satisfied.

$$\{ (LSB + LDB) - (LSA + LDA) \} / \{ (RSA + RDA) - (LSA + LDA) \} > 0.25 \qquad (2)$$

Under the lens design condition where Conditional Expression (2) is satisfied, the difference between the sum of the size of the distinct vision region 16R and the size of the within-limit change region 17R on the center side of the right eye spectacle lens 10R and the sum of the size of the distinct vision region 16L and the size of the within-limit change region 17L on the center side of the left eye spectacle lens 10L is smaller than the difference exhibited when the right eye spectacle lens 10R and the left eye spectacle lens 10L are designed under the standard design condition, with a ratio exceeding 25%. With this arrangement, it is possible to make smaller the difference in the clarity (the blurriness) experienced when an object is viewed through the lenses, as compared to when the right eye spectacle lens 10R and the left eye spectacle lens 10L are designed under the standard design condition. Accordingly, it is possible to provide the pair of spectacle lenses 1 which makes it easy to have binocular vision even when the right eye spectacle lens 10R and the left eye spectacle lens 10L have the mutually-different distance vision lens power values.

Further, when Conditional Expression (1) is satisfied, used as the design parameters under the lens design condition for the right eye spectacle lens 10R are the size RSA of the distinct vision region 16R and the size RDA of the within-limit change region 17R on the center side of the right eye spectacle lens 10R designed under the standard design condition. As the design parameters under the lens design condition for the left eye spectacle lens 10L, the size LSB of the distinct vision region 16L and the size LDB of the within-limit change region 17L on the center side of the left eye spectacle lens 10L are calculated so as to be as equal as possible to the size RSA of the distinct vision region 16R and the size RDA of the within-limit change region 17R on the center side of the right eye spectacle lens 10R designed under the standard design condition. In this manner, by calculating the size LSB of the distinct vision region 16L and the size LDB of the within-limit change region 17L on the center side of the left eye spectacle lens 10L in accordance with the size RSA of the distinct vision region 16R and the size RDA of the within-limit change region 17R on the center side of the right eye spectacle lens 10R designed under the standard design condition, it is possible to calculate the lens design condition in the convenient manner.

Next, an example will be described in which the sum of the size RSA of the distinct vision region 16R and the size RDA of the within-limit change region 17R on the center side of the right eye spectacle lens 10R designed under the standard design condition is smaller than the sum of the size LSA of the distinct vision region 16L and the size LDA of the within-limit change region 17L on the center side of the left eye spectacle lens 10L designed under the standard design condition. In this situation, Conditional Expression (3) presented below is satisfied.

$$RSA + RDA < LSA + LDA \ . \ . \ . \ (3)$$

In the present embodiment, when Conditional Expression (3) is satisfied, a lens design condition is calculated so that Conditional Expression (4) presented below is satisfied.

$$\{ (RSB + RDB) - (RSA + RDA) \} / \{ (LSA + LDA) - (RSA + RDA) \} > 0.25 \qquad (4)$$

Also under the lens design condition where Conditional Expression (4) is satisfied, the difference between the sum of the size of the distinct vision region 16R and the size of the within-limit change region 17R on the center side of the right eye spectacle lens 10R and the sum of the size of the distinct vision region 16L and the size of the within-limit change region 17L on the center side of the left eye spectacle lens 10L is smaller than the difference exhibited when the right eye spectacle lens 10R and the left eye spectacle lens 10L are designed under the standard design condition, with a ratio exceeding 25%. With this arrangement, it is possible to make smaller the difference in the clarity (the blurriness) experienced when an object is viewed through the lenses, as compared to when the right eye spectacle lens 10R and the left eye spectacle lens 10L are designed under the standard design condition. Accordingly, it is possible to provide the pair of spectacle lenses 1 which makes it easy to have binocular vision even when the right eye spectacle lens 10R and the left eye spectacle lens 10L have the mutually-different distance vision lens power values.

Further, when Conditional Expression (3) is satisfied, used as the design parameters under the lens design condition for the left eye spectacle lens 10L are the size LSA of the distinct vision region 16L and the size LDA of the within-limit change region 17L on the center side of the left eye spectacle lens 10L designed under the standard design condition. As the design parameters under the lens design condition for the right eye spectacle lens 10R, the size RSB of the distinct vision region 16R and the size RDB of the within-limit change region 17R on the center side of the right eye spectacle lens 10R are calculated so as to be as equal as possible to the size LSA of the distinct vision region 16L and the size LDA of the within-limit change region 17L on the center side of the left eye spectacle lens 10L designed under the standard design condition. In this manner, by calculating the size RSB of the distinct vision region 16R and the size RDB of the within-limit change region 17R on the center side of the right eye spectacle lens 10R in accordance with the size LSA of the distinct vision region 16L and the size LDA of the within-limit change region 17L on the center side of the left eye spectacle lens 10L designed under the standard design condition, it is possible to calculate the lens design condition in the convenient manner.

In this situation, it is assumed that the lens power changes (the refractive power changes) in the within-limit change regions of the right eye spectacle lens 10R and the left eye spectacle lens 10L denote lens power changes made to the distance vision lens power (refractive power changes made to the refractive power suitable for distance vision). With this configuration, it is possible to make smaller the difference in the clarity (the blurriness) experienced when an object is viewed through the right eye distance vision part 11R of the right eye spectacle lens 10R and the left eye distance vision part 11L of the left eye spectacle lens 10L.

Further, as mentioned earlier, the right eye spectacle lens 10R comprises the right eye progressive part 13R which is provided between the right eye distance vision part 11R and the right eye near vision part 12R and in which the refractive power transitions between the refractive power of the right eye distance vision part 11R and the refractive power of the right eye near vision part 12R. The left eye spectacle lens 10L comprises the left eye progressive part 13L which is provided between the left eye distance vision part 11L and the left eye near vision part 12L and in which the refractive power transitions between the refractive power of the left eye distance vision part 11L and the refractive power of the left eye near vision part 12L. As noted herein, it is desirable that the spectacle lenses 10 are progressive refractive power lenses.

Next, numerical value examples of the design parameters under the lens design condition according to the present embodiment will be described. As a first numerical value example, an example will be described with reference to FIGS. 6 to 8 in which the sizes of the distinct vision regions on the center side of the spectacle lenses 10 are relatively large, while the astigmatism values in the regions outside the distinct vision regions are relatively high. As shown in FIG. 6, in the first numerical value example, RSA = 28.7 mm and RDA = 22.1 mm are used. As shown in FIG. 7, in the first numerical value example, LSA = 27.2 mm and LDA = 19.5 mm are used. Accordingly, RSA + RDA = 50.8 mm and LSA + LDA = 46.7 mm are calculated, which means Conditional Expression (1) presented above is satisfied. In this situation, LSB = 29.0 mm and LDB = 21.0 mm shall be applied, as shown in FIG. 8. Consequently, {(LSB + LDB) - (LSA + LDA)} / {(RSA + RDA) - (LSA + LDA)} = 0.804 is calculated, which means Conditional Expression (2) presented above is satisfied.

As a result of Conditional Expression (2) presented above being satisfied, the size LSB of the distinct vision region 16L and the size LDB of the within-limit change region 17L on the center side of the left eye spectacle lens 10L differ little from the size RSA of the distinct vision region 16R and the size RDA of the within-limit change region 17R on the center side of the right eye spectacle lens 10R. Accordingly, the difference in the clarity (the blurriness) experienced when an object is viewed through the right eye spectacle lens 10R and the left eye spectacle lens 10L is kept small. Consequently, it is possible to provide the pair of spectacle lenses 1 which makes it easy to have binocular vision even when the right eye spectacle lens 10R and the left eye spectacle lens 10L have the mutually-different distance vision lens power values.

An example will be described in which, in the first numerical value example, the sizes of the distinct vision regions and the sizes of the within-limit change regions on the center side of the spectacle lenses 10 are opposite between the left and the right. In this situation, RSA = 27.2 mm and RDA = 19.5 mm are used. Further, LSA = 28.7 mm and LDA = 22.1 mm are used. Accordingly, RSA + RDA = 46.7 mm and LSA + LDA = 50.8 mm are calculated, which means Conditional Expression (3) presented above is satisfied. In this situation, RSB = 29.0 mm and RDB = 21.0 mm shall be applied. Consequently, { (RSB + RDB) - (RSA + RDA)} / {(LSA + LDA) - (RSA + RDA)} = 0.804 is calculated, which means Conditional Expression (4) presented above is satisfied.

As a result of Conditional Expression (4) presented above being satisfied, the size RSB of the distinct vision region 16R and the size RDB of the within-limit change region 17R on the center side of the right eye spectacle lens 10R differ little from the size LSA of the distinct vision region 16L and the size LDA of the within-limit change region 17L on the center side of the left eye spectacle lens 10L. Accordingly, the difference in the clarity (the blurriness) experienced when an object is viewed through the right eye spectacle lens 10R and the left eye spectacle lens 10L is kept small. Consequently, it is possible to provide the pair of spectacle lenses 1 which makes it easy to have binocular vision even when the right eye spectacle lens 10R and the left eye spectacle lens 10L have the mutually-different distance vision lens power values.

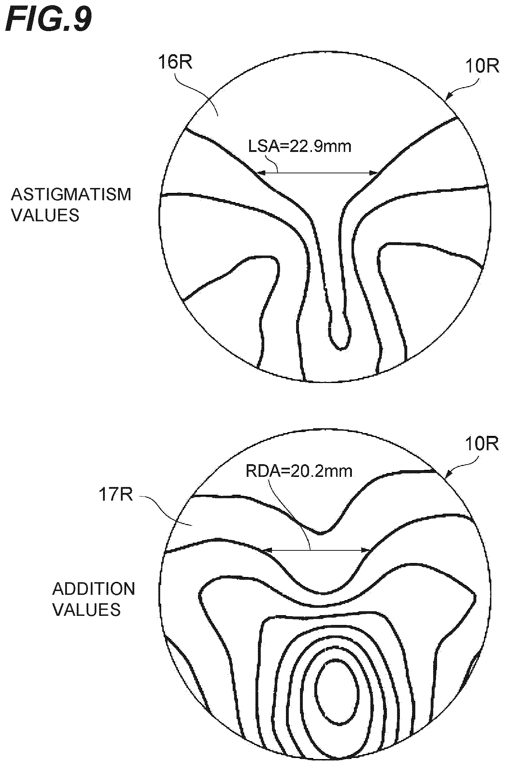

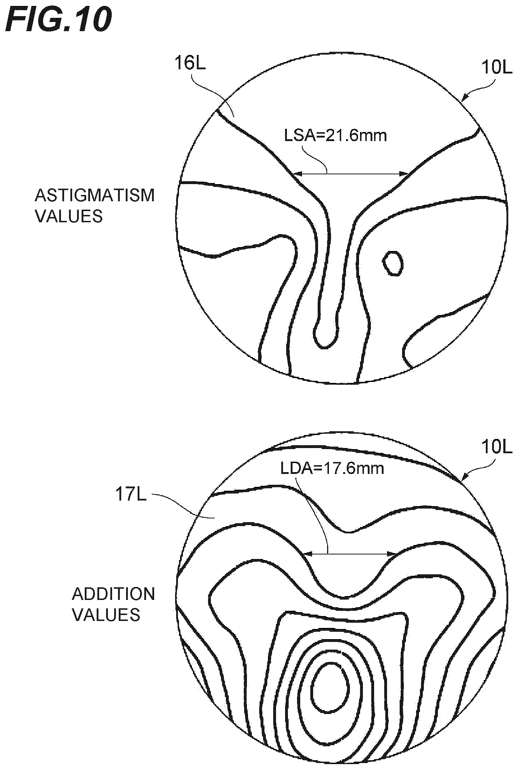

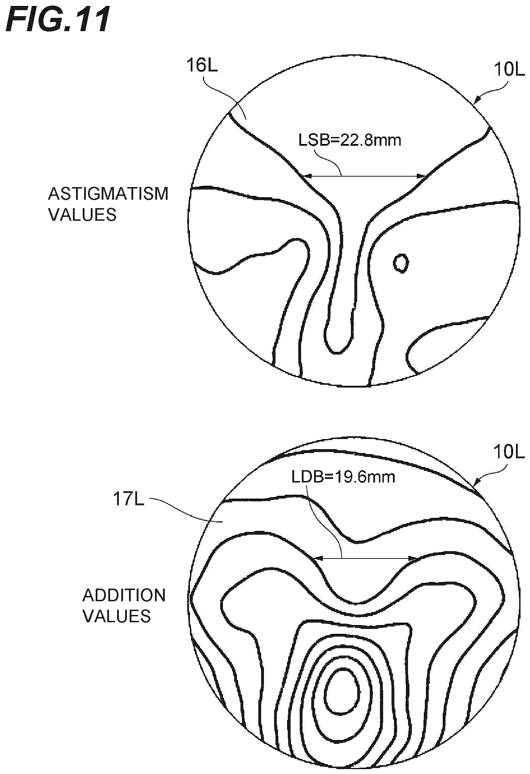

Next, as a second numerical value example, an example will be described with reference to FIGS. 9 to 11 in which the sizes of the distinct vision regions on the center side of the spectacle lenses 10 are relatively small, while the astigmatism values in the regions outside the distinct vision regions are relatively low. FIG. 9 indicates a distribution of astigmatism values and a distribution of addition values in the right eye spectacle lens 10R designed under the standard design condition corresponding to the prescription lens power of "S +2.00". FIG. 10 indicates a distribution of astigmatism values and a distribution of addition values in the left eye spectacle lens 10L designed under the standard design condition corresponding to the prescription lens power of "S +4.00". FIG. 11 indicates a distribution of astigmatism values and a distribution of addition values in the left eye spectacle lens 10L designed under the lens design condition corresponding to the prescription lens power of "S +4.00".

As shown in FIG. 9, in the second numerical value example, RSA = 22.9 mm and RDA = 20.2 mm are used. As shown in FIG. 10, in the second numerical value example, LSA = 21.6 mm and LDA = 17.6 mm are used. Accordingly, RSA + RDA = 43.1 mm and LSA + LDA = 39.2 mm are calculated, which means Conditional Expression (1) presented above is satisfied. In this situation, LSB = 22.8 mm and LDB = 19.6 mm shall be applied, as shown in FIG. 11. Consequently, {(LSB + LDB) - (LSA + LDA)} / { (RSA + RDA) - (LSA + LDA)} = 0.821 is calculated, which means Conditional Expression (2) presented above is satisfied.

As a result of Conditional Expression (2) presented above being satisfied, the size LSB of the distinct vision region 16L and the size LDB of the within-limit change region 17L on the center side of the left eye spectacle lens 10L differ little from the size RSA of the distinct vision region 16R and the size RDA of the within-limit change region 17R on the center side of the right eye spectacle lens 10R. Consequently, similarly to the first numerical value example, it is possible to provide the pair of spectacle lenses 1 which makes it easy to have binocular vision even when the right eye spectacle lens 10R and the left eye spectacle lens 10L have the mutually-different distance vision lens power values.

An example will be described in which, in the second numerical value example, the sizes of the distinct vision regions and the sizes of the within-limit change regions on the center side of the spectacle lenses 10 are opposite between the left and the right. In this situation, RSA = 21.6 mm and RDA = 17.6 mm are used. Further, LSA = 22.9 mm and LDA = 20.2 mm are used. Accordingly, RSA + RDA = 39.2 mm and LSA + LDA = 43.1 mm are calculated, which means Conditional Expression (3) presented above is satisfied. In this situation, RSB = 22.8 mm and RDB = 19.6 mm shall be applied. Consequently, { (RSB + RDB) - (RSA + RDA)} / {(LSA + LDA) - (RSA + RDA)} = 0.821 is calculated, which means Conditional Expression (4) presented above is satisfied.

As a result of Conditional Expression (4) presented above being satisfied, the size RSB of the distinct vision region 16R and the size RDB of the within-limit change region 17R on the center side of the right eye spectacle lens 10R differ little from the size LSA of the distinct vision region 16L and the size LDA of the within-limit change region 17L on the center side of the left eye spectacle lens 10L. Consequently, similarly to the first value numerical example, it is possible to provide the pair of spectacle lenses 1 which makes it easy to have binocular vision even when the right eye spectacle lens 10R and the left eye spectacle lens 10L have the mutually-different distance vision lens power values.

As shown in FIGS. 7 and 8 and FIGS. 10 and 11, in the left eye spectacle lens 10L designed under the lens design condition, the distinct vision region 16L is larger than that in the left eye spectacle lens 10L designed under the standard design condition. Further, in the region outside the distinct vision region 16L, the density of the contour lines of the astigmatism is higher, and the astigmatism is higher. As described herein, in the present embodiment, the larger a distinct vision region is on the center side of the spectacle lenses 10, the higher is the astigmatism in the region outside the distinct vision region. Consequently, because it is possible to change the sizes of the distinct vision regions on the center side of the spectacle lenses 10, by changing the magnitudes of the astigmatism (the goal aberrations) on the outer circumferential side of the spectacle lenses 10, it is possible to conveniently calculate the lens design condition that makes it easy to have binocular vision.

In the above embodiments, the lens power changes (the refractive power changes) in the within-limit change regions of the spectacle lenses 10 denote the lens power changes made to the distance vision lens power (the refractive power changes made to the refractive power suitable for the distance vision); however, possible embodiments are not limited to this example. For instance, the lens power changes in the within-limit change regions of the spectacle lenses 10 may denote lens power changes made to the near vision lens power (refractive power changes made to the refractive power suitable for the near vision). In that situation, it is possible to express the size RSB of the distinct vision region 16R and the size of the within-limit change region 17R on the center side of the right eye spectacle lens 10R, by using widths in the left-and-right direction which use the near vision reference point NR as a reference. It is possible to express the size of the distinct vision region 16L and the size of the within-limit change region 17L on the center side of the left eye spectacle lens 10L, by using widths in the left-and-right direction which use the near vision reference point NL as a reference.

Further, the within-limit change regions and the distinct vision regions of the spectacle lenses 10 do not necessarily need to be one set. For example, it is also acceptable to use, as the design parameters under the lens design condition according to the present embodiment, the size of a first within-limit change region in which the lens power change made to the distance vision lens power is within a predetermined range and the size of a first distinct vision region corresponding to the first within-limit change region; and the size of a second within-limit change region in which the lens power change made to the near vision lens power is within a predetermined range and the size of a second distinct vision region corresponding to the second within-limit change region, on the center side of the spectacle lenses 10.

In the above embodiments, the lens design condition is calculated in accordance with the larger of the sizes of the distinct vision regions and the sizes of the within-limit change regions designed under the standard design condition, between the right eye spectacle lens 10R and the left eye spectacle lens 10L; however, possible embodiments are not limited to this example. For instance, it is also acceptable to calculate the lens design condition in accordance with the smaller of the sizes of the distinct vision regions and the sizes of the within-limit change regions designed under the standard design condition, between the right eye spectacle lens 10R and the left eye spectacle lens 10L. In yet another example, it is also acceptable to calculate the lens design condition in accordance with a size that falls between the sizes of the distinct vision regions designed under the standard design condition and a size that falls between the sizes of the within-limit change regions designed under the standard design condition, in the right eye spectacle lens 10R and the left eye spectacle lens 10L.

Further, it is possible to express the sizes of the distinct vision regions and the sizes of the within-limit change regions on the center side of the spectacle lenses 10, by using the widths in the left-and-right direction which use either the distance vision reference point or the near vision reference point as a reference; however, possible embodiments are not limited to this example. For instance, it is also possible to express the sizes of the distinct vision regions and the sizes of the within-limit change regions on the center side of the spectacle lenses 10, by using the areas within predetermined regions each including either the distance vision reference point or the near vision reference point.

EXPLANATION OF NUMERALS AND CHARACTERS

1: pair of spectacle lenses
10R: right eye spectacle lens; 10L: left eye spectacle lens
11R: right eye distance vision part; 11L: left eye distance vision part
12R: right eye near vision part; 12L: left eye near vision part
16R: distinct vision region; 16L: distinct vision region
17R: within-limit change region; 17L: within-limit change region

**Claims**

1. A method for manufacturing a pair of spectacle lenses comprising a right eye spectacle lens used for a right eye and a left eye spectacle lens used for a left eye, wherein

the right eye spectacle lens includes a right eye distance vision part having refractive power suitable for distance vision and a right eye near vision part having refractive power suitable for near vision,
the left eye spectacle lens includes a left eye distance vision part having refractive power that is suitable for distance vision and different from that of the right eye distance vision part and a left eye near vision part having refractive power suitable for near vision, and
the method comprises:

calculating a lens design condition under which a difference between a sum of a size of a distinct vision region having astigmatism lower than a predetermined value and a size of a within-limit change region having a refractive power change within a predetermined range on a center side of the right eye spectacle lens and a sum of the size of the distinct vision region and the size of the within-limit change region on a center side of the left eye spectacle lens is smaller than the difference exhibited when the right eye spectacle lens and the left eye spectacle lens are designed under a predetermined design condition;

designing the right eye spectacle lens and the left eye spectacle lens under the calculated lens design condition; and

manufacturing the right eye spectacle lens and the left eye spectacle lens designed under then lens design condition.

2. The method for manufacturing the pair of spectacle lenses according to claim 1, wherein

when the following conditional expression RSA + RDA > LSA + LDA is satisfied, the lens design condition is calculated so that the following conditional expression {(LSB + LDB) - (LSA + LDA)} / {(RSA + RDA) - (LSA + LDA)} > 0.25 is satisfied, where

RSA: the size of the distinct vision region on the center side of the right eye spectacle lens designed under the predetermined design condition;

RDA: the size of the within-limit change region on the center side of the right eye spectacle lens designed under the predetermined design condition;

LSA: the size of the distinct vision region on the center side of the left eye spectacle lens designed under the predetermined design condition;

LDA: the size of the within-limit change region on the center side of the left eye spectacle lens designed under the predetermined design condition;

LSB: the size of the distinct vision region on the center side of the left eye spectacle lens designed under the lens design condition; and

LDB: the size of the within-limit change region on the center side of the left eye spectacle lens designed under the lens design condition.

3. The method for manufacturing the pair of spectacle lenses according to claim 1 or 2, wherein

when the following conditional expression RSA + RDA < LSA + LDA is satisfied, the lens design condition is calculated so that the following conditional expression {(RSB + RDB) - (RSA + RDA)} / {(LSA + LDA) - (RSA + RDA)} > 0.25 is satisfied, where

RSA: the size of the distinct vision region on the center side of the right eye spectacle lens designed under the predetermined design condition;

RDA: the size of the within-limit change region on the center side of the right eye spectacle lens designed under the predetermined design condition;

LSA: the size of the distinct vision region on the center side of the left eye spectacle lens designed under the predetermined design condition;

LDA: the size of the within-limit change region on the center side of the left eye spectacle lens designed under the predetermined design condition;

RSB: the size of the distinct vision region on the center side of the right eye spectacle lens designed under the lens design condition; and

RDB: the size of the within-limit change region on the center side of right eye spectacle lens designed under the lens design condition.

4. The method for manufacturing the pair of spectacle lenses according to any one of claims 1 to 3, wherein the larger the distinct vision region is, the higher is astigmatism in a region outside the distinct vision region.

5. The method for manufacturing the pair of spectacle lenses according to any one of claims 1 to 4, wherein the refractive power change is a refractive power change made to the refractive power suitable for the distance vision.

6. The method for manufacturing the pair of spectacle lenses according to any one of claims 1 to 5, wherein

the right eye spectacle lens comprises a right eye progressive part which is provided between the right eye distance vision part and the right eye near vision part and in which refractive power transitions between the refractive power of the right eye distance vision part and the refractive power of the right eye near vision part, and

the left eye spectacle lens comprises a left eye progressive part which is provided between the left eye distance vision part and the left eye near vision part and in which refractive power transitions between the refractive power of the left eye distance vision part and the refractive power of the left eye near vision part.

*FIG.1*

*FIG.2*

# FIG.3

# FIG.4

50

**DESIGN DEVICE** 60

INPUT PART ~61

DISPLAY PART ~62

COMMUNICATION PART ~63

STORAGE PART ~64

**CONTROL PART** 71

DETERMINATION PART 72

SPECTACLE LENS DESIGN PART 73

PROCESSOR CONTROL DEVICE 80

SPECTACLE LENS PROCESSOR 85

## FIG.5

```
          ┌─────────────┐
          │    START    │
          └──────┬──────┘
                 │
                 ▼
     ┌───────────────────────┐
     │   OBTAIN PRESCRIPTION  │── ST1
     │    DATA OF WEARER      │
     └───────────┬───────────┘
                 │
                 ▼           ST2
          ╱─────────────╲
         ╱ ARE PRESCRIPTION╲
        ╱  LENS POWER VALUES ╲   NO
        ╲   EQUAL BETWEEN    ╱─────────────┐
         ╲ LEFT AND RIGHT? ╱               │
          ╲───────┬───────╱                │
              YES  │  ST3                ST4│
                   ▼                         ▼
     ┌───────────────────────┐    ┌───────────────────────┐
     │    DESIGN UNDER        │    │     DESIGN UNDER       │
     │  STANDARD DESIGN       │    │    LENS DESIGN         │
     │    CONDITION           │    │     CONDITION          │
     └───────────┬───────────┘    └───────────┬───────────┘
                 │                             │
                 │◄────────────────────────────┘
                 ▼
     ┌───────────────────────┐
     │  MANUFACTURE A PAIR OF │── ST5
     │   SPECTACLE LENSES     │
     └───────────┬───────────┘
                 │
                 ▼
          ┌─────────────┐
          │     END     │
          └─────────────┘
```

# FIG.6

ASTIGMATISM
VALUES

16R

10R

RSA=28.7mm

ADDITION
VALUES

10R

17R

RDA=22.1mm

# FIG.7

16L          10L

**ASTIGMATISM VALUES**

LSA=27.2mm

10L

17L

LDA=19.5mm

**ADDITION VALUES**

# FIG.8

ASTIGMATISM
VALUES

16L

10L

LSB=29.0mm

ADDITION
VALUES

17L

10L

LDB=21.0mm

## FIG.9

16R       10R

ASTIGMATISM
VALUES

LSA=22.9mm

10R

17R

RDA=20.2mm

ADDITION
VALUES

# FIG.10

ASTIGMATISM
VALUES

16L    10L

LSA=21.6mm

ADDITION
VALUES

17L    10L

LDA=17.6mm

# FIG.11

ASTIGMATISM VALUES

16L  10L  LSB=22.8mm

ADDITION VALUES

17L  10L  LDB=19.6mm

**INTERNATIONAL SEARCH REPORT**

International application No.

**PCT/JP2022/036881**

| A. | CLASSIFICATION OF SUBJECT MATTER |
|---|---|

*G02C 7/06*(2006.01)i; *G02C 13/00*(2006.01)i
FI:   G02C7/06; G02C13/00

According to International Patent Classification (IPC) or to both national classification and IPC

| B. | FIELDS SEARCHED |
|---|---|

Minimum documentation searched (classification system followed by classification symbols)

G02C7/06; G02C13/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2011-48386 A (HOYA CORP.) 10 March 2011 (2011-03-10)<br>paragraphs [0002]-[0004], [0060]-[0065], fig. 7-12 | 1-6 |
| X | JP 2012-103669 A (SEIKO EPSON CORP.) 31 May 2012 (2012-05-31)<br>paragraphs [0071]-[0099], fig. 7-8 | 1-6 |
| A | JP 2001-318344 A (NIKON-ESSILOR CO., LTD.) 16 November 2001 (2001-11-16)<br>entire text, all drawings | 1-6 |
| A | JP 2017-122941 A (HOYA CORP.) 13 July 2017 (2017-07-13)<br>entire text, all drawings | 1-6 |
| A | JP 2004-138794 A (PENTAX CORP.) 13 May 2004 (2004-05-13)<br>entire text, all drawings | 1-6 |

☐ Further documents are listed in the continuation of Box C.          ☑ See patent family annex.

| | |
|---|---|
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **22 November 2022** | **06 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/036881**

| Patent document cited in search report | | | Publication date (day/month/year) | Patent family member(s) | | | Publication date (day/month/year) |
|---|---|---|---|---|---|---|---|
| JP | 2011-48386 | A | 10 March 2011 | US | 2008/0273170 | A1 | |
| | | | | paragraphs [0002]-[0005], [0132]-[0137], fig. 7-12 | | | |
| | | | | EP | 1767983 | A1 | |
| | | | | WO | 2006/001409 | A1 | |
| JP | 2012-103669 | A | 31 May 2012 | US | 2012/0086910 | A1 | |
| | | | | paragraphs [0092]-[0120], fig. 7-8 | | | |
| | | | | EP | 2442171 | A2 | |
| | | | | CN | 102445767 | A | |
| JP | 2001-318344 | A | 16 November 2001 | (Family: none) | | | |
| JP | 2017-122941 | A | 13 July 2017 | US | 2016/0004096 | A1 | |
| | | | | EP | 2937728 | A1 | |
| | | | | KR | 10-2015-0103036 | A | |
| | | | | CN | 105103040 | A | |
| | | | | WO | 2014/097853 | A1 | |
| JP | 2004-138794 | A | 13 May 2004 | US | 2004/0109134 | A1 | |
| | | | | GB | 2396223 | A | |
| | | | | DE | 10347063 | A1 | |
| | | | | FR | 2846104 | A1 | |

Form PCT/ISA/210 (patent family annex) (January 2015)

**EP 4 421 554 A1**

**REFERENCES CITED IN THE DESCRIPTION**

**Patent documents cited in the description**

- JP 6310847 B
- JP 4979774 B